# EUROPÄISCHE PATENTANMELDUNG

(11) **EP 2 845 466 A1**
(43) Veröffentlichungstag der Anmeldung: **11.03.2015**
(21) Anmeldenummer: 13405106.9
(22) Anmeldetag: 04.09.2013
(51) Int. Cl.: A01G 27/00, A01G 27/04

(54) **Verfahren zur Aufzucht von Pflanzensetzlingen und geeignete Vorrichtung hierfür**

(71) Anmelder: Di Roma, Claudio, 8112 Otelfingen (CH)
(72) Erfinder: Di Roma, Claudio, 8112 Otelfingen (CH)
(74) Vertreter: EGLI-EUROPEAN PATENT ATTORNEYS

(57) **Zusammenfassung**

Die Erfindung betrifft Verfahren (19) zur Anzucht und/oder zur Aufzucht von Pflanzensetzlingen (2), bei dem handelsübliche Pflanzbodenaufnahmebehältnisse (3) nachträglich mit zumindest einem Fluidtransportmittel (8, 11, 12) versehen werden.

## Beschreibung

Die Erfindung betrifft ein Verfahren zur Anzucht und/oder zur Aufzucht von Pflanzensetzlingen. Weiterhin betrifft die Erfindung ein Fluidtransportmittel zur Einbringung von Fluid in einen Pflanzboden und/oder zum Austrag von Fluid aus einem Pflanzboden.

Bei der gewerblichen Anzucht und Aufzucht von Pflanzen in Gewächshäusern ist die Verwendung von Pflanzsäcken üblich. Derartige Pflanzsäcke bestehen grundsätzlich aus einem geschlossenen Plastiksack, in welchem sich ein Pflanzboden befindet. Bei diesem Pflanzboden kann es sich beispielsweise um normale (Pflanz-) Erde handeln, die oftmals für die Zwecke der Anzucht bzw. Aufzucht von kleinen Pflanzensetzlingen geeignet behandelt ist. Beispielsweise kann es sich um sogenannte "Aufzuchterde" handeln, welche beispielsweise durch Wärmebehandlung sterilisiert ist, sodass Krankheitserreger, die den jungen Setzlingen gefährlich werden könnten, entfernt oder in ihrer Anzahl zumindest stark verringert wurden. Grundsätzlich ist es jedoch auch möglich, andere Pflanzböden zu verwenden, wie beispielsweise Granulate, die beispielsweise auch im Wesentlichen nährstofffrei sein können und bei denen die Nährstoffversorgung durch entsprechende Nährlösungen realisiert wird (sogenannte Hydrokulturen).

Derartige Pflanzsäcke werden meist in Aufnahmeschalen gelegt und es wird eine Mehrzahl von kleinen Öffnungen in die Oberseite der Pflanzsack-Folie geschnitten, sodass die Pflanzensetzlinge durch diese Öffnungen hindurch in die Pflanzerde eingesetzt werden können. Oftmals werden hierzu auch Markierungen auf den Pflanzsäcken vorgesehen, sodass für den Arbeiter die Positionen, an denen die Pflanzensetzlinge mit geeignetem Abstand zueinander eingesetzt werden sollen, klar ersichtlich sind. Die Wasser- und Nährstoffversorgung erfolgt heutzutage meist durch kleine Zuleitungsschläuche. Diese werden oftmals als sogenannte "Spinnen" bezeichnet, was in ihrem Aussehen begründet liegt. Diese weisen einen "Hauptwasserschlauch" auf, der zu einem Verteiler führt. Ausgehend vom Verteiler geht eine Vielzahl von kleinen Schläuchen mit deutlich geringerem Querschnitt aus. Am jeweiligen anderen Ende der kleinen "Feinverteilerschläuche" befinden sich oftmals pfeilspitzenartige, hohle Spiesse. Diese werden an einem Ende (welches eine Öffnung aufweist, durch die Wasser hindurchfliessen kann), jeweils benachbart zu den Setzlingen, durch die Plastikfolie des Pflanzsacks hindurch in den Pflanzboden gesteckt. Hierdurch kann jeder Setzling individuell mit Wasser und Nährstoffen versorgt werden. Ein Problem bei derartigen "Spinnen" ist, dass diese relativ aufwändig zu verlegen sind (pro Setzling wird typischerweise ein Spiess in die Pflanzerde gesteckt). Darüber hinaus neigen derartige Spinnen aufgrund ihres komplexen Aufbaus mit geringen Durchflussdurchmessern dazu, dass einzelne Schlauchleitungen (oder auch Öffnungen von Spiessen) verstopfen können. Dies kann zu einem Minderertrag oder sogar zu einem Absterben einzelner Setzlinge führen, was naturgemäss unerwünscht ist.

Weiterhin ist es üblich, dass die Pflanzsäcke auf ihrer Unterseite mit weiteren Öffnungen versehen werden, sodass überschüssiges Wasser bzw. überschüssige Nährlösung den Pflanzsack wieder verlassen kann, sodass ein Faulen der Setzlingwurzeln vermieden werden kann. Die entsprechenden Löcher können ebenfalls manuell "gestochen" werden oder aber durch geeignete Spitzen, die in den Aufnahmeschalen für die Pflanzsäcke ausgebildet sind, "automatisiert erzeugt" werden.

Um den Arbeitsaufwand zu reduzieren, wurden bereits unterschiedliche Vorschläge gemacht. Beispielsweise wurde im Europäischen Patent EP 2 164 319 A1 ein spezieller Pflanzsack vorgesehen, in dem ein Granulat für Hydrokulturen aufgenommen ist. Der Pflanzsack ist integral mit einem flachen Schlauch (welcher mit Mikrolöchern versehen ist) oder einem porösen flexiblen Rohr in seinem Inneren ausgebildet. Über diesen "Verteilerschlauch" ist es möglich, durch den Anschluss des betreffenden "Verteilerschlauchs" an einen Zuführschlauch, den Pflanzsack mit Wasser bzw. Nährstofflösung zu versorgen. Ein Problem hierbei ist jedoch, dass spezielle Pflanzsäcke verwendet werden müssen, was die Akzeptanz des Systems nicht unerheblich einschränkt.

In der Europäischen Patentanmeldung EP 0 642 300 A1 ist eine weitere Bewässerungseinrichtung für Pflanzsäcke vorgesehen. Gemäss einem der dort ausgeführten Ausführungsbeispiele besteht die Bewässerungseinrichtung aus einem steifen, mit einer Mehrzahl von Löchern versehenen Rohr, an dem an einem Ende ein Wasservorratstank befestigt ist. Am dazu beabstandeten Ende des Rohrs ist ein abgerundetes Endstück auf das Rohr aufgesteckt, sodass das Rohr leicht zwischen der Plastikfolie eines Pflanzsacks und dem darin befindlichen Pflanzboden hindurchgeführt werden kann, ohne jedoch in den Pflanzboden einzudringen. Ein Vorteil bei dieser Vorrichtung besteht darin, dass im Wesentlichen beliebige "Standard-pflanzsäcke" verwendet werden können. Die Handhabung der Vorrichtung erfordert jedoch ein vergleichsweise feinfühliges Arbeiten.

Obgleich im Stand der Technik bekannte Verfahren zur Anzucht und/oder Aufzucht von Pflanzensetzlingen bzw. hierfür geeignete Vorrichtungen durchaus gute Resultate hervorbringen, ist es nach wie vor erwünscht, die entsprechenden Verfahren bzw. Systeme weiter zu verbessern. Insbesondere ist es erwünscht, den "Verlegeaufwand" weiter zu verringern und darüber hinaus den Pflanzenertrag zu erhöhen bzw. das Wachstum der Setzlinge weiter zu beschleunigen.

Die Aufgabe der Erfindung besteht somit darin, ein Verfahren zur Anzucht und/oder Aufzucht von Pflanzensetzlingen vorzuschlagen, welches gegenüber derartigen Verfahren, wie sie im Stand der Technik bekannt sind, verbessert ist. Weiterhin besteht die Aufgabe der Erfindung darin, eine Vorrichtung zur Anzucht und/oder Aufzucht von Pflanzensetzlingen vorzuschlagen, welche gegenüber Vorrichtungen, wie sie im Stand der Technik bekannt sind, verbessert ist.

Die Erfindung löst diese Aufgabe.

Es wird vorgeschlagen, ein Verfahren zur Anzucht und/oder zur Aufzucht von Pflanzensetzlingen in mit Pflanzboden gefüllten Pflanzbodenaufnahmebehältnissen derart durchzuführen, dass handelsübliche Pflanzbodenaufnahmebehältnisse nachträglich mit zumindest einem Fluidtransportmittel versehen werden. Bei dem zumindest einen Fluidtransportmittel kann es sich insbesondere um ein Lufteinbringungsmittel und/oder ein Flüssigkeitseinbringungsmittel und/oder ein Flüssigkeitsabführmittel handeln. Ein grosser Vorteil des vorgeschlagenen Verfahrens ist es, dass keine speziellen Pflanzbodenaufnahmebehältnisse verwendet werden müssen. Stattdessen ist es möglich, handelsübliche Pflanzbodensäcke zu nutzen. Dies ermöglicht es beispielsweise, dass auf bewährte Lieferanten zurückgegriffen werden kann. Darüber hinaus wird ein besonders flexibler Einsatz des Verfahrens möglich, beispielsweise derart, dass in einem Pflanzenzuchtbetrieb einheitliche Pflanzbodenbehältnisse beschafft werden können und, je nach aktuell heranzuziehenden Pflanzen, die Pflanzbodensäcke mit Lufteinbringungsmitteln und/oder Flüssigkeitseinbringungsmitteln und/oder Flüssigkeitsabführmitteln versehen werden. So kann es beispielsweise vorkommen, dass zum Beispiel bei Tomaten ein höherer Aufwand gerechtfertigt ist, bei anderen Pflanzen dagegen nicht. Hier kann flexibel reagiert werden. Der höhere Aufwand muss sich dabei nicht nur auf das Vorhandensein bzw. Weglassen von bestimmten Einrichtungen (wie beispielsweise einem Lufteinbringungsmittel, einem Flüssigkeitseinbringungsmittel bzw. einem Flüssigkeitsabführmittel) beschränken, sondern kann sich auch auf Art und Umfang des bzw. der betreffenden Mittel beziehen. So ist es beispielsweise denkbar, dass für Tomaten eine Mehrzahl von Lufteinbringungsmitteln vorgesehen wird, wohingegen sich bei anderen Pflanzen eine geringere Anzahl bzw. lediglich ein einzelnes Lufteinbringungsmittel (welches gegebenenfalls im Verhältnis zu anderen Lufteinbringungsmitteln besonders einfach aufgebaut sein kann,) als ausreichend erweisen kann. Grundsätzlich ist es möglich, dass das Fluidtransportmittel von seiner grundsätzlichen Wirkungsweise her im Wesentlichen analog zu bisher üblicherweise verwendeten Flüssigkeitseinbringungsmitteln bzw. Flüssigkeitsaustragsmitteln (beispielsweise Schläuche oder Rohre mit Mikroperforationen) ausgebildet ist. Gegebenenfalls können gewisse Modifikationen realisiert werden, wie beispielsweise eine Veränderung der Porosität bzw. der Grösse der Perforationen bzw. Öffnungen, um das Fluidtransportmittel auf das geänderte Fluidverhalten von Luft bzw. von "echten Flüssigkeiten" (wie beispielsweise Wasser) anzupassen. Bei dem Pflanzboden kann es sich im Wesentlichen um beliebige geeignete Materialien handeln, wie beispielsweise normale Pflanzenerde, Pflanzenaufzuchterde (welche typischerweise sterilisiert oder auf sonstige Weise aufbereitet wurde), um Hydrokulturgranulate und dergleichen. Die Wasserzufuhr bzw. Nährstoffzufuhr kann (sofern eine solche vorgesehen wird) in grundsätzlich beliebiger Weise erfolgen. Beispielsweise kann dies durch Beregnungsanlagen bzw. "klassisches Giessen" mit einer Giesskanne oder einem Schlauch durchgeführt werden (insbesondere kann dies als "ergänzende Massnahme" für einzelne Setzlinge von Vorteil sein).

Vorgeschlagen wird weiterhin, dass das zumindest eine Fluidtransportmittel durch zumindest bereichsweises Durchstossen des Pflanzbodens in das Pflanzbodenaufnahmebehältnis eingebracht wird. Erste Versuche haben ergeben, dass in Abweichung vom bisherigen Paradigma das Durchstossen des Pflanzbodens in der Regel vergleichsweise unproblematisch ist (bisher war man davon ausgegangen, dass dies zu vermeiden ist, weil beispielsweise die hierbei erforderlichen Kräfte zu hoch sind). Im Gegenteil hat sich in ersten Pflanzversuchen gezeigt, dass durch eine entsprechende Verlegung "im Inneren" des Pflanzbodens die Bewässerung, Entwässerung, Belüftung bzw. sonstige Durchdringung des Pflanzbodens besonders intensiv bzw. vorteilhaft sein kann und hierdurch ein gesteigertes Pflanzenwachstum realisiert werden kann.

Möglich ist es, das Verfahren derart durchzuführen, dass mittels eines Lufteinbringungsmittels Luft in einen Pflanzboden eingebracht wird. Die Erfinder haben festgestellt, dass sich durch diese verblüffend einfache Massnahme das Wachstum der Setzlinge signifikant beschleunigen lässt. Dies gilt insbesondere für bestimmte Pflanzenarten, wie beispielsweise Tomaten. Erste Untersuchungen legen dabei die Vermutung nahe, dass die derart in den Pflanzboden eingebrachte Luft zu einem "Zerbrechen" von Verklumpungen des Pflanzbodens führt und hierdurch das Pflanzenwachstum gefördert wird. Das Einbringen von Luft kann in grundsätzlich beliebiger Weise erfolgen. Bevorzugt handelt es sich bei dem Lufteinbringungsmittel um ein nachträglich hinzugefügtes, durch den Pflanzboden hindurchgestecktes Lufteinbringungsmittel. Beispielsweise ist es möglich, dass Luft nach Art einer Bewässerungsspinne durch eine Vielzahl von einzelnen Sonden in den Pflanzboden eingebracht wird. Auch ist es möglich, dass im Pflanzboden beispielsweise schlauchartige und/oder rohrartige Leitungen verlegt sind, die sinnvollerweise mit einer Mehrzahl von vergleichsweise kleinen Öffnungen versehen sind, durch die Luft austreten kann. Bevorzugt ist es, wenn die Luft nicht nur rein "passiv" in den Pflanzboden eingebracht wird, sondern durch aktive Massnahmen "zwangsweise" in den Pflanzboden befördert wird. In diesem Zusammenhang ist beispielsweise an eine Art von Pumpe zu denken, die das Lufteinbringungsmittel mit Luft versorgt. Bei der Luft handelt es sich typischerweise um einfache "Atmosphärenluft". Das schliesst es jedoch nicht aus, dass die Luft durch bestimmte Massnahmen vor der Einbringung in den Pflanzboden aufgearbeitet wird, wie beispielsweise durch Filtern, durch Einbringen von speziellen Mitteln (beispielsweise Anreicherung mit Stickstoff oder sonstigen Gasen), durch Anreicherung mit Wasserdampf und/oder durch eine Temperaturänderung.

Es soll im Übrigen möglich sein, dass der Aspekt der Erfindung, dass mittels eines Lufteinbringungsmittels Luft in einen Pflanzboden eingebracht wird, auch in Alleinstellung beansprucht werden kann (und insbesondere unabhängig von dem Aspekt, dass handelsübliche Pflanzbodenaufnahmebehältnisse nachträglich mit zumindest einem Fluidtransportmittel versehen werden). Dieser Aspekt der Einbringung von Luft kann natürlich unter Verwendung von anderen Vorschlägen, wie sie im Rahmen dieser Druckschrift gemacht werden, auf grundsätzlich beliebige Weise fortgebildet werden (dabei ist gegebenenfalls der Begriff eines "Fluidtransportmittels" durch den Begriff eines "Lufteinbringungsmittels" zu ersetzen, und/oder umgekehrt). Insbesondere dann, wenn von diesem Aspekt der Erfindung ausgegangen wird, ist es möglich, dass das Lufteinbringungsmittel im Wesentlichen analog zu bisher üblicherweise verwendeten Flüssigkeitseinbringungsmitteln (beispielsweise Schläuche oder Rohre mit Mikroperforationen) ausgebildet ist. Gegebenenfalls können gewisse Modifikationen realisiert werden, wie beispielsweise eine Veränderung der Porosität bzw. der Grösse der Perforationen bzw. Öffnungen, um das Mittel auf diese Weise auf das geänderte Fluidverhalten von Luft gegenüber "echten Flüssigkeiten" (wie beispielsweise Wasser) anzupassen. Bei dem Pflanzboden kann es sich im Wesentlichen um beliebige geeignete Materialien handeln, wie beispielsweise normale Pflanzenerde, Pflanzenaufzuchterde (welche typischerweise sterilisiert oder auf sonstige Weise aufbereitet wurde), um Hydrokulturgranulate und dergleichen. Die Wasserzufuhr bzw. Nährstoffzufuhr kann (sofern eine solche vorgesehen wird) in grundsätzlich beliebiger Weise erfolgen. Beispielsweise kann dies durch Beregnungsanlagen bzw. "klassisches Giessen" mit einer Giesskanne oder einem Schlauch durchgeführt werden.

Vorteilhaft ist es, wenn das Verfahren derart durchgeführt wird, dass mittels eines Flüssigkeitseinbringungsmittels eine Flüssigkeit, insbesondere Wasser und/oder eine Nährlösung in den Pflanzboden eingebracht wird. Bei diesem Flüssigkeitseinbringungsmittel kann es sich um grundsätzlich im Stand der Technik bekannte Flüssigkeitseinbringungsmittel handeln, wie beispielsweise um die bereits beschriebene "Spinne", um Rohrleitungen mit Flüssigkeitsdurchlassöffnungen, die auf oder im Pflanzboden verlegt sind und dergleichen. Vorteilhafterweise handelt es sich jedoch um ein nachträglich hinzugefügtes, durch den Pflanzboden hindurch gestecktes Flüssigkeitseinbringungsmittel. Vorzugsweise ist das Flüssigkeitseinbringungsmittel derart ausgebildet, dass die Setzlinge (welche bevorzugt an bestimmten, vorab definierten Stellen eingebracht sind) möglichst gleichmässig mit der betreffenden Flüssigkeit (also insbesondere Wasser bzw. eine Nährlösung) versorgt werden. Hierdurch wird ein besonders gleichmässiges Pflanzenwachstum aller Pflanzensetzlinge bewirkt.

Vorteilhaft ist es weiterhin, wenn das Verfahren derart durchgeführt wird, dass mittels eines Flüssigkeitsabführmittels überschüssige Flüssigkeit, insbesondere Wasser und/oder eine Nährlösung aus dem Pflanzboden abgeführt wird. Auch diese Massnahme ist als solche an sich im Stand der Technik bekannt. Sie kann beispielsweise durch in einem Bodenbereich angeordnete Löcher in einer Aufnahmeschale bzw. in einem Pflanzsack (oder dergleichen) realisiert werden. Dadurch kann die Flüssigkeit auf einfache Weise unter Einwirkung von Gravitationskräften den Pflanzboden "verlassen". Möglich ist es aber auch, dass das Flüssigkeitsabführmittel beispielsweise als gesonderte Leitung (nach Art einer Drainageleitung) ausgebildet ist. Dabei ist es bevorzugt, wenn es sich bei dem Flüssigkeitsabführmittel um ein nachträglich hinzugefügtes, durch den Pflanzboden hindurch gestecktes Flüssigkeitsabführmittel handelt.

Eine weitere vorteilhafte Ausgestaltung des Verfahrens kann sich ergeben, wenn das Lufteinbringungsmittel die Luft unterhalb des Flüssigkeitseinbringungsmittels in den Pflanzboden einbringt. In ersten Versuchen hat sich eine derartige relative Anordnung von Lufteinbringung und Flüssigkeitseinbringung als besonders wachstumsfördernd erwiesen. "Oben" und "unten" wird dabei insbesondere in Bezug auf die auf den Pflanzboden bzw. die Pflanzensetzlinge einwirkende Schwerkraft definiert.

Vorteilhaft ist es, wenn das Verfahren derart durchgeführt wird, dass der Pflanzboden in Form von im Wesentlichen verschlossenen Pflanzbodenaufnahmebehältnissen, insbesondere in Form von Pflanzbodensäcken, bereitgestellt wird. Hierdurch kann eine besonders rasche Neubepflanzung bzw. Pflanzenwechsel in einem Treibhaus realisiert werden. Insbesondere ist es auch möglich, dass neue Setzlinge gewissermassen stets mit neuem Pflanzboden (welcher beispielsweise sterilisiert ist) versorgt werden können, ohne dass dies vom betrieblichen Aufwand her übermässig komplex ist. Die Pflanzbodenaufnahmebehältnisse weisen dabei üblicherweise eine dünne Umhüllung, welche bevorzugt folienartig ist (beispielsweise eine Kunststofffolie) auf. Darüber hinaus entspricht dieser besondere Aspekt des Verfahrens dem derzeit üblicherweise genutzten Standardverfahren für Gewächshäuser, sodass der betriebliche Ablauf zu grossen Teilen nicht geändert werden muss, was die Akzeptanz des Verfahrens signifikant erhöhen kann. Es wird darauf hingewiesen, dass die Pflanzbodenaufnahmebehältnisse (Pflanzbodensäcke bzw. Pflanzsäcke) nicht notwendigerweise "vollständig geöffnet" werden müssen. Im Gegenteil ist es möglich, dass die betreffenden Behältnisse (beispielsweise die Plastikfolie von Pflanzsäcken) lediglich mit einigen kleineren Einschnitten, Löchern bzw. Durchführungsöffnungen versehen werden. Vorteilhaft ist es insbesondere auch, wenn die Pflanzbodenaufnahmebehältnisse mit Sollbruchstellen und/oder mit Markierungen versehen sind, insbesondere an solchen Stellen, an denen nachträglich Fluidtransportmittel in das Pflanzbodenaufnahmebehältnis hineingesteckt werden sollen.

Möglich ist es weiterhin, das Verfahren derart auszugestalten, dass ein Pflanzbodenaufnahmebehältnis verwendet wird, bei dem zumindest ein zweites Fluidtransportmittel vorgesehen ist, das integral mit dem Pflanzbodenaufnahmebehältnis ausgebildet ist. Bei dem Fluidtransportmittel kann es sich insbesondere um ein Lufteinbringungsmittel und/oder ein Flüssigkeitseinbringungsmittel und/oder ein Flüssigkeitsabführmittel handeln. Auch eine derartige Ausbildung des Verfahrens kann sich als besonders vorteilhaft erweisen, weil hierdurch der Handhabungsaufwand nochmals verringert werden kann. Es wird darauf hingewiesen, dass eine (teilweise) "integrale Ausbildung" eine zusätzliche "nachträgliche Anbringung" von Lufteinbringungsmitteln, Flüssigkeitseinbringungsmitteln bzw. Flüssigkeitsabführmitteln nicht ausschliesst. So ist es im Sinne der vorherigen Beschreibung beispielsweise möglich, dass stets ein einzelnes Lufteinbringungsmittel (fest) vorgesehen ist, und bedarfsweise bei bestimmten Pflanzen (beispielsweise Tomaten) noch ein zweites (nachträglich anzubringendes) Lufteinbringungsmittel vorgesehen wird. Auch hierdurch kann ein besonders flexibler und universeller Einsatz des Verfahrens realisiert werden.

Der Vollständigkeit halber sollte erwähnt werden, dass nicht nur im Zusammenhang mit dem Lufteinbringungsmittel, sondern auch insbesondere im Zusammenhang mit dem Flüssigkeitseinbringungsmittel und/oder dem Flüssigkeitsabführmittel noch zusätzliche Einrichtungen vorgesehen werden können, wie beispielsweise Pumpen und dergleichen.

Weiterhin wird ein Fluidtransportmittel zur Einbringung von Fluid in einen Pflanzboden und/oder zum Austrag von Fluid aus einem Pflanzboden vorgeschlagen, wobei das Fluidtransportmittel eine Pflanzbodenverdrängungsspitze aufweist. Hierdurch kann einerseits ein Eindringen von Pflanzboden in das Fluidtransportmittel hinein vorteilhaft verhindert werden. Andererseits kann durch eine entsprechende Formgebung der Pflanzbodenverdrängungsspitze ein besonders einfaches und vergleichsweise wenig kraftaufwändiges Einstecken des Fluidtransportmittels in den Pflanzboden bzw. ein Hindurchstecken durch den Pflanzboden realisiert werden. Im Übrigen lassen sich mit dem Fluidtransportmittel die bereits im Zusammenhang mit dem Verfahren beschriebenen Vorteile und Eigenschaften zumindest in analoger Weise realisieren. Auch eine Weiterbildung im Sinne der vorherigen Beschreibung ist zumindest in analoger Weise möglich.

Weiterhin soll es möglich sein, ein Lufteinbringungsmittel zur Einbringung von Luft in einen Pflanzboden auch "in Alleinstellung" zu beanspruchen, wobei eine Mehrzahl von Luftdurchlassöffnungen, insbesondere Perforationen, vorhanden sind, welche beim Lufteinbringungsmittel vorgesehen sind. Mit einem derartigen Lufteinbringungsmittel können sich die bereits im Zusammenhang mit dem Verfahren (insbesondere die mit dem "alternativ vorgeschlagenen Verfahren") beschriebenen Vorteile und Eigenschaften zumindest in analoger Weise realisieren lassen. Auch eine Weiterbildung im Sinne der vorherigen (sowie der noch folgenden) Beschreibung ist zumindest grundsätzlich und/oder in analoger Weise möglich (gegebenenfalls ist dabei der Begriff eines "Fluidtransportmittels" durch den Begriff eines "Lufteinbringungsmittels" zu ersetzen, und/oder umgekehrt). Durch die Mehrzahl von Luftdurchlassöffnungen kann eine besonders "fein verteilte" Verteilung der eingebrachten Luft realisiert werden, wodurch in aller Regel ein besonders hohes Pflanzenwachstum realisiert werden kann.

Möglich ist es, das Fluidtransportmittel zumindest bereichsweise als schlauchartiges und/oder als rohrartiges Fluidtransportmittel auszubilden. Zusätzlich oder alternativ ist es möglich, das Fluidtransportmittel als Lufteinbringungsmittel und/oder als Flüssigkeitseinbringungsmittel und/oder als Flüssigkeitsabführmittel auszubilden. Die vorgeschlagene Formgebung kommt der Verwendung von üblicherweise in Treibhäusern oder dergleichen Betrieben verwendeten Pflanzbodensäcken entgegen. Darüber hinaus kann mit einer derartigen Ausbildung mit einem einzelnen Anschluss (beispielsweise Schraubanschluss, Schnellverbindungsanschluss oder dergleichen) eine besonders grosse Weglänge bzw. eine grosse Fläche auf einfache Weise mit dem betreffenden Mittel (insbesondere Luft) versorgt werden. Hierdurch kann der Montageaufwand besonders klein ausfallen. Obgleich es grundsätzlich möglich ist, dass das schlauchartige bzw. rohrartige Lufteinbringungsmittel flexibel ausgebildet ist, so ist es von Vorteil, wenn dieses starr ausgebildet ist bzw. zumindest eine gewisse Eigensteifigkeit aufweist. Insbesondere ein "nachträgliches Einstecken", insbesondere in den Pflanzboden hinein und durch den Pflanzboden hindurch, kann dadurch auf besonders einfache Weise ermöglicht werden.

Vorgeschlagen wird, das Fluidtransportmittel mit einer Mehrzahl von Fluiddurchlassöffnungen, insbesondere Perforationen, zu versehen. Durch die Mehrzahl von Fluiddurchlassöffnungen kann eine besonders "fein verteilte" Verteilung der eingebrachten Luft bzw. des eingebrachten Wassers (oder eines sonstigen Fluid) realisiert werden, wodurch in aller Regel ein besonders hohes Pflanzenwachstum realisiert werden kann. Entsprechendes gilt für einen Fluidaustrag.

Bevorzugt ist es, wenn das Fluidtransportmittel sich über seine Länge hinweg verjüngend, insbesondere sich konisch verjüngend ausgebildet ist. Dies bezieht sich insbesondere auf den Fluiddurchtrittsquerschnitt des Fluidtransportmittels. Sinnvoll ist es dabei insbesondere, wenn der Fluiddurchtrittsquerschnitt im Wesentlichen im Bereich eines Anschlusses am grössten ist und sich zu einem geschlossenen Ende hin (wie beispielsweise im Bereich der Pflanzbodenverdrängungsspitze) verjüngt und im Wesentlichen in einem derartigen Endbereich am kleinsten ist. Hierdurch kann Material eingespart werden, ein Einführen des Fluidtransportmittels in den Pflanzboden erleichtert werden und insbesondere die Verteilungscharakteristik des Fluidtransportmittels in Bezug auf das Fluid besonders vorteilhaft ausfallen. Das Gesagte kann dabei für im Wesentlichen beliebige Bauausführungen des Fluidtransportmittels gelten, insbesondere für rohrartige Fluidtransportmittel, aber auch für in ein Pflanzbodenaufnahmebehältnis integrierte Fluidtransportmittel. Der Vollständigkeit halber wird darauf hingewiesen, dass sich in manchen Fällen auch eine im Wesentlichen zylindrische Bauausführung des Fluidtransportmittels als vorteilhaft erweisen kann (insbesondere dann, wenn dies lediglich gewisse Längenbereiche des Fluidtransportmittes betrifft). Insbesondere in herstellungstechnischer Hinsicht kann dies von Vorteil sein. Es wird darauf hingewiesen, dass das Gesagte insbesondere für ein Lufteinbringungsmittel und/oder ein Flüssigkeitseinbringungsmittel und/oder ein Flüssigkeitsabführmittel gelten kann.

Weiterhin wird ein Pflanzbodenaufnahmebehältnis vorgeschlagen, welches ein reversibel mit dem Pflanzbodenaufnahmebehältnis verbundenes Fluidtransportmittel im Sinne der vorherigen Beschreibung aufweist. Insbesondere kann es sich bei dem Pflanzbodenaufnahmebehältnis um einen Pflanzbodensack handeln. Hierbei können insbesondere derzeit übliche "Standard-Pflanzbodenaufnahmebehältnisse" verwendet werden. Dies kann die Akzeptanz des Verfahrens - wie bereits erwähnt - fördern. Die "reversible" Verbindung kann dabei insbesondere derart ausgestaltet sein, dass eine bzw. eine Mehrzahl oder (im Wesentlichen) alle der genannten Einbringungs- bzw. Abführmittel zumindest bereichsweise durch den Pflanzboden "hindurch" verlaufen bzw. gesteckt werden. Hierdurch kann eine besonders intensive "Durchmischung" bzw. "Feinverteilung" realisiert werden. Bei dem Fluidtransportmittel kann es sich insbesondere um ein Lufteinbringungsmittel und/oder um ein Flüssigkeitseinbringungsmittel und/oder ein Flüssigkeitsabführmittel handeln.

Möglich soll es im Übrigen auch sein, dass ein Pflanzbodenaufnahmebehältnis beansprucht werden kann, welches zumindest ein Lufteinbringungsmittel aufweist (egal ob das zumindest eine Lufteinbringungsmittel reversibel oder irreversibel mit dem Pflanzbodenaufnahmebehältnis verbunden ist). Möglich ist es insbesondere beim Vorhandensein einer Mehrzahl von Lufteinbringungsmitteln, dass ein Teil der Lufteinbringungsmittel reversibel mit dem Pflanzbodenaufnahmebehältnis verbunden ist, wohingegen ein anderer Teil der Lufteinbringungsmittel irreversibel mit dem Pflanzbodenaufnahmebehältnis verbunden ist. Selbstverständlich ist auch eine Weiterbildung eines derartigen Pflanzbodenaufnahmebehältnisses möglich, insbesondere unter zumindest sinngemässer Verwendung von Merkmalen, die im Rahmen dieser Druckschrift genannt werden.

Eine vorteilhafte Weiterbildung des Pflanzbodenaufnahmebehältnisses kann sich ergeben, wenn dieser ein zusätzliches, integral mit dem Pflanzbodenaufnahmebehältnis ausgebildetes Fluidtransportmittel aufweist. Derartige Pflanzbodenaufnahmebehältnisse können dann als "Ersatz" bzw. Austauschmittel für derzeit verwendete Pflanzbodenaufnahmebehältnisse genutzt werden, wobei jedoch üblicherweise bedeutende Vorteile, insbesondere hinsichtlich des Pflanzenwachstums, realisiert werden können.

Eine vorteilhafte Weiterbildung des Pflanzbodenaufnahmebehältnisses kann sich ergeben, wenn ein Fluidtransportmittel, insbesondere ein Flüssigkeitseinbringungsmittel und/oder ein Flüssigkeitsabführmittel, mit bevorzugt einer Mehrzahl von Flüssigkeitsdurchlassöffnungen, insbesondere Perforationen, versehen ist. Mit einem derartigen Pflanzbodenaufnahmebehältnis kann dann neben der vorgeschlagenen vorteilhaften Belüftung auch eine einfache Bewässerung und Zuführung von Nährstoffen (und hierzu korrespondierend auch Entwässerung/Abfuhr von Nährstoffen) realisiert werden. Auch dies kann sich als vorteilhaft für das Pflanzenwachstum erweisen.

Weiterhin wird vorgeschlagen, das beschriebene Verfahren, das beschriebene Fluidtransportmittel bzw. das beschriebene Pflanzbodenaufnahmebehältnis zur Anzucht von flüssigkeits-überschussempfindlichen Pflanzensetzlingen, wie insbesondere von Tomatensetzlingen, zu verwenden. Erste Versuche haben ergeben, dass gerade bei derartigen Pflanzen besonders grosse Wachstumssteigerungen realisierbar sind.

Weitere Einzelheiten der Erfindung und insbesondere beispielhafte Ausführungsformen der vorgeschlagenen Vorrichtung und des vorgeschlagenen Verfahrens werden im Folgenden anhand der beigefügten Zeichnungen erläutert. Es zeigen:
- Fig. 1: ein erstes mögliches Ausführungsbeispiel für eine Anordnung zum Belüften und Bewässern von Setzlingen, die in einem Pflanzsack aufgezogen werden sollen, in einer schematischen Explosionsansicht;
- Fig. 2: die in Fig. 1 dargestellte Anordnung zum Bewässern und Belüften von Setzlingen, die in einem Pflanzsack aufgezogen werden sollen, in einer perspektivischen Ansicht in zusammengesetztem Zustand;
- Fig. 3: ein denkbares Ausführungsbeispiel für ein Verfahren zur Anzucht und Aufzucht von Pflanzensetzlingen;
- Fig. 4: ein zweites mögliches Ausführungsbeispiel für eine Anordnung zum Belüften und Bewässern von Setzlingen, die in einem Pflanzsack aufgezogen werden sollen, in einer perspektivischen Ansicht im zusammengesetzten Zustand.

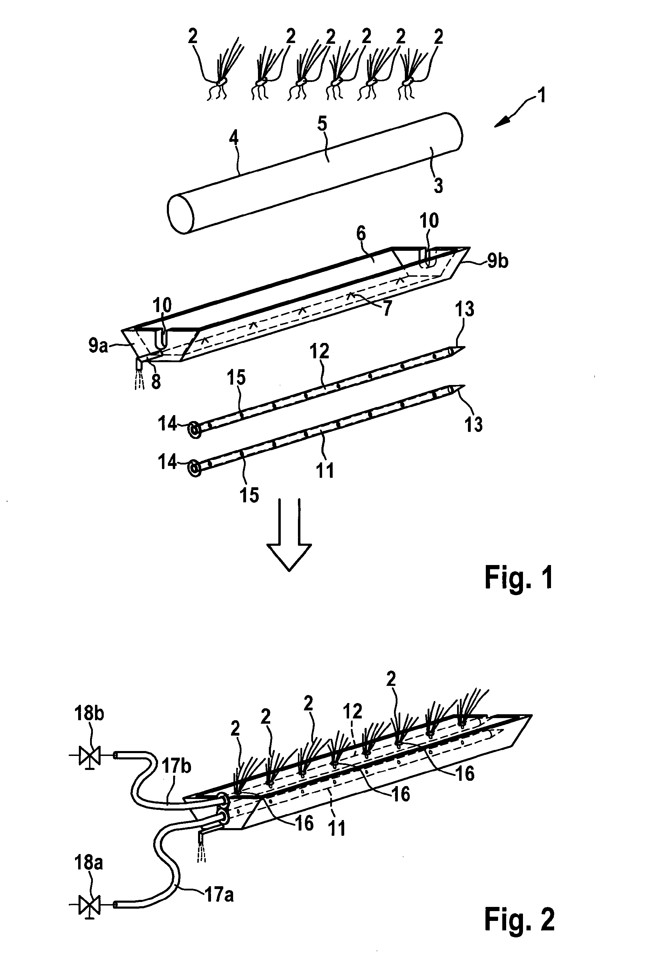

In Fig. 1 ist in schematischer, perspektivischer Ansicht eine Art "Bausatz" 1 für eine Anordnung zur Aufzucht von Setzlingen 2 (Pflanzensetzlingen) dargestellt. Bei den Setzlingen 2 kann es sich um im Wesentlichen beliebige Pflanzensetzlinge 2 handeln. Möglich ist es, dass es sich dabei um die gleiche Pflanzenart und/oder Setzlinge mit im Wesentlichen gleichen Alter handelt (was in der Regel bevorzugt ist); ebenso denkbar ist es aber auch, dass Setzlinge 2 unterschiedlicher Pflanzenarten und/oder Setzlinge 2 unterschiedlichen Alters verwendet werden. Die Setzlinge 2 sind nicht Teil des "eigentlichen" Bausatzes 1, sondern dienen insbesondere der Illustrierung der Anordnung.

In Fig. 1 ist ein typischer Pflanzsack 3 ("Pflanzbodenaufnahmebehältnis" bzw. "Pflanzbodensack") schematisch dargestellt. Obgleich der Pflanzsack 3 vorliegend schematisch als zylindrischer Gegenstand eingezeichnet ist, so ist dieser typischerweise "tütenartig", sich an den beiden Enden verjüngend, ausgeführt. Der Pflanzsack 3 weist in an sich bekannter Weise eine folienartig ausgebildete Hülle 4 aus einem Kunststoffmaterial auf. Im Inneren des Pflanzsacks 3 ist eine Art von Pflanzboden, wie vorliegend beispielsweise sogenannte Aufzuchterde 5, enthalten. Ebenso möglich ist es aber auch, dass es sich beispielsweise um granulatartiges Material, wie beispielsweise Hydrokulturgranulat handelt.

Der längliche Pflanzsack 3 wird in einen Trog 6, mit zum Pflanzsack 3 korrespondierender Grösse, eingelegt. Im Bodenbereich des Trogs 6 sind dabei einige Dornen 7 vorgesehen, die beim Einlegen des Pflanzsacks 3 in den Trog 6 die Hülle 4 im entsprechenden Bereich punktieren und hierdurch Löcher schaffen, durch die überschüssiges Wasser bzw. überschüssige Nährlösung entfernt werden kann. Um den Abfluss von derartigem überschüssigen Wasser/Nährlösung zu vereinfachen, ist an einem Ende des Trogs 6 eine Abflussöffnung 8 vorgesehen.

Weiterhin ist an den beiden Stirnseiten 9 des Trogs 6 jeweils eine u-förmige Aussparung 10 zu erkennen, die der Aufnahme von Endbereichen eines Belüftungsrohrs 11 sowie eines Bewässerungsrohrs 12 dienen (wird im Folgenden noch näher erläutert).

Nachdem der Pflanzsack 3 in den Trog 6 eingelegt ist, werden nacheinander jeweils ein Belüftungsrohr 11 sowie ein Bewässerungsrohr 12, ausgehend von einer Stirnseite 9 des Trogs 6, in Längsrichtung des Trogs 6 (also in Richtung der jeweils anderen Stirnseite 9 des Trogs 6) durch den Pflanzsack 3 und insbesondere auch durch die im Pflanzsack 3 befindliche Aufzuchterde 5 hindurchgesteckt. Erstaunlicherweise ist der Kraftaufwand für das Hineinstecken von Belüftungsrohr 11 und Bewässerungsrohr 12 deutlich geringer als bisher angenommen. Insbesondere ist dies ohne Probleme von einer einzelnen Person durchführbar, ohne dass dies für die betreffende Person übermässig anstrengend wäre.

Um das Einstecken von Belüftungsrohr 11 und Bewässerungsrohr 12 zu erleichtern, sind diese jeweils an einer Seite mit einer Spitze 13 versehen, die einerseits das Durchstechen der Hülle 4 des Pflanzsacks 3 erleichtert sowie andererseits das Hindurchschieben von Belüftungsrohr 11 bzw. Bewässerungsrohr 12 durch die Aufzuchterde 5 hindurch erleichtert. Typische Dimensionen für die Länge des Trogs sind im Übrigen ca. 1 bis 2 m (typischerweise weisen sowohl Belüftungsrohr 11 als auch Bewässerungsrohr 12 eine im Wesentlichen untereinander und/oder zum Trog 6 bzw. zum Pflanzsack 3 gleichartige Länge und einen Durchmesser von typischerweise 1 bis 2 cm auf). Um das Einstecken von Belüftungsrohr 11 und Bewässerungsrohr 12 weiter zu erleichtern, sind diese am zu ihrer Spitze 13 entgegengesetzten Ende jeweils mit einer Griffscheibe 14 versehen, sodass einerseits ein einfacher "flächiger Druck" durch eine Hand ausgeübt werden kann, andererseits auch eine Begrenzung hinsichtlich der Eindringtiefe des jeweiligen Rohrs 11, 12 (nach Art einer "Anschlagscheibe") zur Verfügung gestellt wird.

Weiterhin ist beim Belüftungsrohr 11 und beim Bewässerungsrohr 12 jeweils eine Vielzahl von Mikroöffnungen 15 vorgesehen. Die Mikroöffnungen 15 dienen zum gleichmässigen, über die gesamte Länge des jeweiligen Rohrs 11, 12 verteilten Ausfluss von Luft bzw. von Wasser (gegebenenfalls auch einer Nährlösung). Möglich ist es, dass sowohl Belüftungsrohr 11 als auch Bewässerungsrohr 12 im Wesentlichen gleichartig ausgebildet sind (dabei ist es beispielsweise möglich, dass unterschiedliche Farben zur Unterscheidung bzw. unterschiedliche Anschlussflansche zur Versorgung mit Luft bzw. Wasser vorgesehen werden). Es ist insbesondere auch möglich, dass die Durchmesser der Mikroöffnungen 15 jeweils auf Luft bzw. Wasser optimiert sind und eine unterschiedliche Grösse aufweisen.

Nachdem der Pflanzsack 3 in den Trog 6 gelegt wurde und Belüftungsrohr 11 und Bewässerungsrohr 12 eingeschoben wurden, kann nun in an sich bekannter Weise ein Benutzer beispielsweise mit einem Messer oder einer Art Pflanzdorn die Hülle 4 des Pflanzsacks 3 in bestimmten Abständen durchstechen und jeweils einen Setzling 2 in das betreffende Loch 16 einsetzen.

Anschliessend werden noch Anschlussschläuche 17 mit dem Belüftungsrohr 11 bzw. dem Bewässerungsrohr 12 verbunden, über die diese mit Luft bzw. Wasser versorgt werden. Die Versorgung kann dabei über eine elektronische Steuerung (vorliegend nicht näher dargestellt) gesteuert werden. Insbesondere können zur (dosierten) Versorgung von Belüftungsrohr 11 bzw. Bewässerungsrohr 12 mit dem entsprechenden Fluid (ansteuerbare) Ventile 18 verwendet werden.

Die Belüftungsrohre 11 bzw. Bewässerungsrohre 12 sind vorzugsweise aus einem steifen Kunststoffmaterial gefertigt (gegebenenfalls auch aus einem nicht korrodierenden Metall), sodass diese einerseits ausreichend stabil sind (Durchstecken durch die Aufzuchterde 5), aber dennoch leicht und haltbar (keine Korrosion) sind. Insbesondere können Belüftungsrohr 11 und Bewässerungsrohr 12 vielfach wieder verwendet werden.

Ein grosser Vorteil ist, dass pro Pflanzsack 3 bzw. Trog 6 jeweils ein "einzelner Handgriff" ausreicht, um eine gesamte Reihe an Setzlingen 2 mit Luft bzw. mit Wasser/Nährlösung zu versorgen. Dies ist gegenüber bekannten Vorrichtungen nach Art einer "Spinne" deutlich einfacher und schneller durchzuführen.

Wie insbesondere aus Fig. 2 (zum Teil auch aus Fig. 1) ersichtlich, ist es bevorzugt, wenn das Belüftungsrohr 11 unterhalb des Bewässerungsrohrs 12 angeordnet ist (bzw. allgemein sich der Belüftungsbereich unterhalb des Bewässerungsbereichs befindet). Erste Versuche haben ergeben, dass hierdurch das Pflanzenwachstum üblicherweise gegenüber dem "umgedrehten Fall" (Belüftungsbereich oberhalb des Bewässerungsbereichs) signifikant gesteigert werden kann. Dies scheint darin begründet zu liegen, dass die "aufsteigende Luft" sich gegebenenfalls bildende Erdklumpen, die sich infolge der Flüssigkeitszufuhr bilden, wieder "zerbricht" (gegebenenfalls "mit Einfluss" der Wurzeln der Setzlinge 2).

Weiterhin wird darauf hingewiesen, dass die Verfahrensschritte (Einstecken von Belüftungsrohr 11 bzw. Bewässerungsrohr 12; Verbindung der Rohre 11, 12 mit Anschlussleitungen 17; Einbringen der Setzlinge 2) gegebenenfalls auch in unterschiedlicher Reihenfolge erfolgen können. In aller Regel ist es jedoch sinnvoll, wenn zumindest die Setzlinge 2 erst nach dem Einstecken des Belüftungsrohrs 11 und insbesondere auch des Bewässerungsrohrs 12 (Bewässerungsrohr 12 liegt benachbart zu den Setzlingen 2) eingesetzt werden, da hierdurch eine Beschädigung der Wurzeln der Setzlinge 2 auf einfache Weise effektiv vermieden werden kann.

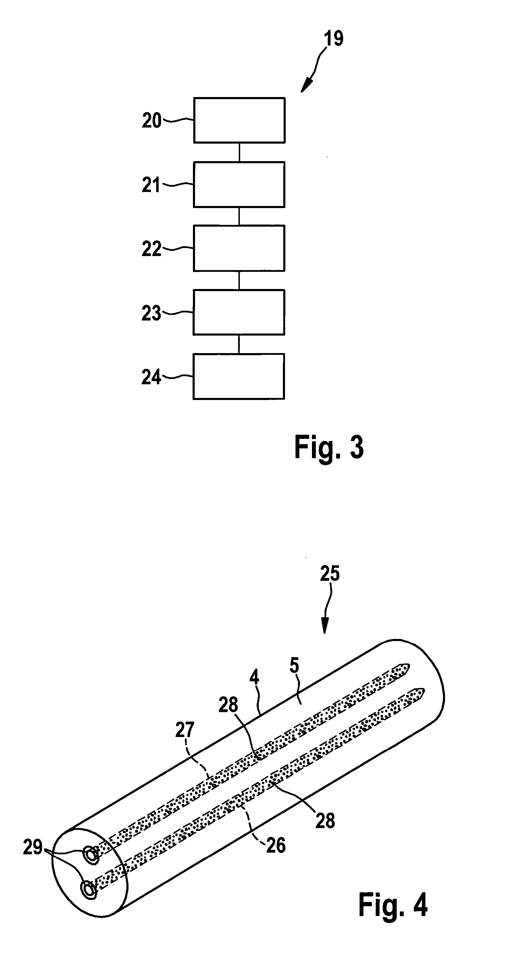

In Fig. 3 ist ein Verfahren zur Anzucht bzw. Aufzucht von Pflanzensetzlingen in Form eines schematischen Flussdiagramms 19 dargestellt.

In einem ersten Schritt 20 werden Pflanzsäcke 3 "bereitgestellt", beispielsweise durch einfaches Einlegen in einen Trog 6. Anschliessend werden in einem zweiten Schritt 21 ein Belüftungsrohr 11 und vorzugsweise auch ein Bewässerungsrohr 12 durch seitliches Einschieben in die Aufzuchterde 5 des Pflanzsacks 3 eingesteckt.

Anschliessend werden in einem dritten Verfahrensschritt 22 Belüftungsrohr 11 und gegebenenfalls Bewässerungsrohr 12 mit Anschlussleitungen 17 verbunden, sodass eine Versorgung der Aufzuchterde 5 (bzw. schlussendlich der Setzlinge 2) erfolgen kann. Schliesslich werden die Setzlinge 2 in den Pflanzsack 3 eingesetzt (Schritt 23; wobei gegebenenfalls vorab Löcher 16 in die Hülle 4 des Pflanzsacks 3 eingebracht werden).

Anschliessend kann (optional) eine automatisierte Steuerung gestartet werden (Schritt 24), sodass die Versorgung der Setzlinge 2 mit ausreichend Luft bzw. Wasser weitgehend automatisiert erfolgen kann (gegebenenfalls können auch Sensoren vorgesehen werden, die beispielsweise den Feuchtigkeitsgehalt der Aufzuchterde 5 messen). Hierzu kann beispielsweise eine elektronische Steuerung (nicht dargestellt) genutzt werden.

Es wird darauf hingewiesen, dass das vorgeschlagene Verfahren 19 auch mit anderen "Bauteilen" durchgeführt werden kann. Die Benutzung der in Fig. 1 und Fig. 2 verwendeten Bezugszeichen dient lediglich dem leichteren Verständnis des vorgeschlagenen Verfahrensablaufs.

In Fig. 4 ist schliesslich noch schematisch dargestellt, dass es auch möglich ist, einen Pflanzsack 25 mit bereits "fertig integriertem" Belüftungsschlauch 26 bzw. Bewässerungsschlauch 27 zu versehen. Im vorliegend dargestellten Ausführungsbeispiel sind sowohl Belüftungsschlauch 26 als auch Bewässerungsschlauch 27 als "Schlauchleitung" aus dem gleichen Kunststoffmaterial gefertigt, wie es der Hülle 4 des Pflanzsacks 25 entspricht. Dies kann durch geeignete Folienbearbeitungsmassnahmen realisiert werden. Belüftungsschlauch 26 und Bewässerungsschlauch 27 weisen jeweils eine Vielzahl an Perforationen 28 auf, durch die Luft bzw. Wasser in die Aufzuchterde 5, welche sich im Pflanzsack 25 befindet, eindringen kann.

An einer Stirnseite des Pflanzsacks sind Belüftungsschlauch 26 und Bewässerungsschlauch 27 "blind", enden also ohne Öffnung nach aussen. An der gegenüberliegenden Stirnseite des Pflanzsacks 25 sind dagegen Anschlussflansche 29 zur Verbindung von Belüftungsschlauch 26 und Bewässerungsschlauch 27 mit korrespondierenden Anschlussschläuchen 17 vorgesehen.

Der in Fig. 4 dargestellte Pflanzsack 25 kann in analoger Weise verwendet werden, wie es im Zusammenhang mit dem Ausführungsbeispiel in Fig. 1 und Fig. 2 dargestellt ist. Aufgrund des integrierten Belüftungsschlauchs 26 und Bewässerungsschlauchs 27 entfällt jedoch das Einstecken von Belüftungsrohr 11 bzw. Bewässerungsrohr 12 in den Pflanzsack, sodass die Handhabung des Pflanzsacks 25 gegenüber dem vorab beschriebenen Pflanzsack 3 leichter ausfallen kann.

## Patentansprüche

1. Verfahren (19) zur Anzucht und/oder zur Aufzucht von Pflanzensetzlingen (2) in mit Pflanzboden (5) gefüllten Pflanzbodenaufnahmebehältnissen (3), **dadurch gekennzeichnet, dass** handelsübliche Pflanzbodenaufnahmebehältnisse (3) nachträglich mit zumindest einem Fluidtransportmittel (8, 11, 12), wie insbesondere einem Lufteinbringungsmittel (11) und/oder einem Flüssigkeitseinbringungsmittel (12) und/oder einem Flüssigkeitsabführmittel (8) versehen werden.

2. Verfahren (19) nach Anspruch 1, **dadurch gekennzeichnet, dass** das Fluidtransportmittel (8, 11, 12) durch zumindest bereichsweises Durchstossen des Pflanzbodens (5) in das Pflanzbodenaufnahmebehältnis (3) eingebracht wird.

3. Verfahren (19) nach Anspruch 1 oder 2, **dadurch gekennzeichnet, dass** mittels eines Lufteinbringungsmittels (11, 26) Luft in einen Pflanzboden (5) eingebracht wird.

4. Verfahren (19) nach einem der vorangehenden Ansprüche, **dadurch gekennzeichnet, dass** mittels eines Flüssigkeitseinbringungsmittels (12, 27) eine Flüssigkeit, insbesondere Wasser und/oder eine Nährlösung in den Pflanzboden (5) eingebracht wird.

5. Verfahren (19) nach einem der vorangehenden Ansprüche, **dadurch gekennzeichnet, dass** mittels eines Flüssigkeitsabführmittels (8) überschüssige Flüssigkeit, insbesondere Wasser und/oder eine Nährlösung aus dem Pflanzboden (5) abgeführt wird.

6. Verfahren (19) nach einem der vorangehenden Ansprüche, insbesondere nach Anspruch 4 oder 5, **dadurch gekennzeichnet, dass** das Lufteinbringungsmittel (11, 26) die Luft unterhalb des Flüssigkeitseinbringungsmittels (12, 27) in den Pflanzboden (5) einbringt.

7. Verfahren (19) nach einem der vorangehenden Ansprüche, **dadurch gekennzeichnet, dass** der Pflanzboden (5) in Form von im Wesentlichen verschlossenen Pflanzbodenaufnahmebehältnissen (3, 25), insbesondere in Form von Pflanzbodensäcken (3, 25), bereitgestellt wird.

8. Verfahren (19) nach einem der vorangehenden Ansprüche, **dadurch gekennzeichnet, dass** ein Pflanzbodenaufnahmebehältnis (25) verwendet wird, bei dem zumindest ein zweites Fluidtransportmittel (26, 27), insbesondere ein Lufteinbringungsmittel (26) und/oder ein Flüssigkeitseinbringungsmittel (27) und/oder ein Flüssigkeitsabführmittel (8) integral mit dem Pflanzbodenaufnahmebehältnis (25)ausgebildet ist.

9. Fluidtransportmittel (8, 11, 12) zur Einbringung von Fluid in einen Pflanzboden (5) und/oder zum Austrag von Fluid aus einem Pflanzboden (5), **gekennzeichnet durch** zumindest eine Pflanzbodenverdrängungsspitze (13).

10. Fluidtransportmittel (8, 11, 12) nach Anspruch 9, **dadurch gekennzeichnet, dass** das Fluidtransportmittel (8, 11, 12) zumindest bereichsweise als schlauchartiges (26) und/oder rohrartiges (11) Fluidtransportmittel ausgebildet ist und/oder dadurch, dass das Fluidtransportmittel als Lufteinbringungsmittel und/oder als Flüssigkeitseinbringungsmittel und/oder als Flüssigkeitsabführmittel ausgebildet ist.

11. Fluidtransportmittel (8, 11, 12) nach Anspruch 9 oder 10, **gekennzeichnet durch** eine Mehrzahl von Fluidtransportmittel (15, 28), insbesondere Perforationen (15, 28), welche beim Fluidtransportmittel (8, 11, 12) vorgesehen sind.

12. Pflanzbodenaufnahmebehältnis (3), insbesondere Pflanzbodensack (25), **gekennzeichnet durch** zumindest ein reversibel mit dem Pflanzbodenaufnahmebehältnis (3) verbundenes Fluidtransportmittel (8, 11, 12) nach einem der Ansprüche 9 bis 11.

13. Pflanzbodenaufnahmebehältnis (25), nach Anspruch 12, **gekennzeichnet durch** zumindest ein zusätzliches, integral mit dem Pflanzbodenaufnahmebehältnis (5) ausgebildetes Fluidtransportmittel (26, 27).

14. Pflanzbodenaufnahmebehältnis (3, 25) nach Anspruch 12 oder 13, **gekennzeichnet durch** ein Fluidtransportmittel (8, 11, 12, 26, 27), insbesondere ein Flüssigkeitseinbringungsmittel (12, 27) und/oder ein Flüssigkeitsabführmittel (8), welches bevorzugt mit einer Mehrzahl von Flüssigkeitsdurchlassöffnungen (15, 28), insbesondere Perforationen (15, 28), versehen ist.

15. Verwendung eines Verfahrens (19) nach einem der Ansprüche 1 bis 8, eines Fluidtransportmittel (8, 11, 12) (11, 26) nach einem der Ansprüche 9 bis 11 oder eines Pflanzbodenaufnahmebehältnisses (3, 25) nach einem der Ansprüche 12 bis 14 zur Anzucht von flüssigkeitsüberschussempfindlichen Pflanzensetzlingen (2), wie insbesondere Tomatensetzlingen.
